# EUROPEAN PATENT APPLICATION

(11) **EP 4 730 465 A1**
(43) Date of publication of application: **22.04.2026**
(21) Application number: 24940902.0
(22) Date of filing: 04.11.2024
(51) Int. Cl.: H01M 10/0567, H01M 10/0525, H01M 10/058, H01M 10/42

(54) **BATTERY**

(30) Priority: 06.08.2024 CN 202411069923
(71) Applicant: Guangzhou Tinci Materials Technology Co., Ltd, Guangzhou, Guangdong 510670 (CN)
(72) Inventor: The designation of the inventor has not yet been filed
(74) Representative: Plougmann Vingtoft a/s
(86) International application number: PCT/CN2024/129728
(87) International publication number: WO 2026/031369

(57) **Abstract**

The present disclosure discloses a battery. A positive electrode plate includes a positive electrode active material layer. The positive electrode active material layer includes a positive electrode active material. A mass fraction of the positive electrode active material based on a total mass of the positive electrode active material layer is denoted as B, and a specific surface area of the positive electrode active material is denoted as C m²/g. A negative electrode plate includes a negative electrode active material. A specific surface area of the negative electrode active material is denoted as E m²/g. An electrolyte includes a compound represented by Formula 1 and LiBF₄. A mass fraction of the compound represented by Formula 1 based on a total mass of the electrolyte is denoted as G. The battery satisfies a formula of 0.20≤(10×B×G×E²)/C≤3.88, and the battery exhibits excellent fast-charging cycle performance under high voltage.

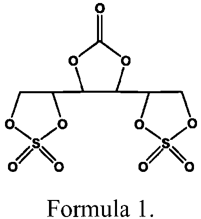

## Description

### PRIORITY INFORMATION

This application claims priority to and benefits of patent application No. 202411069923.2, filed with China National Intellectual Property Administration on August 6, 2024, the entire contents of which are incorporated herein by reference.

### FIELD

The present disclosure belongs to the field of batteries, and more particularly, to a battery.

### BACKGROUND

Lithium-ion batteries are widely used in the fields of consumer electronics, electric vehicles, and energy storage due to their high energy density and cycle performance. Currently, the discharge capacity of lithium-ion batteries is mainly increased by increasing the upper cut-off voltage or the compaction density, to meet consumers' demand for high capacity of lithium-ion batteries.

However, during the high-rate charge/discharge cycling of batteries, metal ions from the positive electrode active material tend to dissolve and further catalyzes the oxidative decomposition of the electrolyte, thereby generating gas. This leads to reduced stability of the solid electrolyte interface (SEI) and the cathode electrolyte interface (CEI), impairs the intercalation/deintercalation capability of lithium ions between the positive and negative electrodes, and causes rapid capacity fading of the battery. As a result, the fast-charging cycle performance of the battery deteriorates, and this issue becomes particularly pronounced under high voltage.

To this end, how to improve the fast-charging cycle performance of high-voltage lithium-ion batteries has become an urgent problem to be solved.

### SUMMARY

The present disclosure aims to solve, at least in part, one of the technical problems existing in the related art. To this end, an objective of the present disclosure is to provide a battery, which has excellent fast-charging cycle performance.

A first aspect of the present disclosure provides a battery including a positive electrode plate, a negative electrode plate, and an electrolyte. The positive electrode plate includes a positive electrode active material layer. The positive electrode active material layer includes a positive electrode active material. A mass fraction of the positive electrode active material based on a total mass of the positive electrode active material layer is denoted as B, and a specific surface area of the positive electrode active material is denoted as C m²/g. The negative electrode plate includes a negative electrode active material. A specific surface area of the negative electrode active material is denoted as E m²/g. The electrolyte includes a compound represented by Formula 1 and LiBF₄. A mass fraction of the compound represented by Formula 1 based on a total mass of the electrolyte is denoted as G. The battery satisfies a formula of 0.20≤(10×B×G×E²)/C≤3.88,

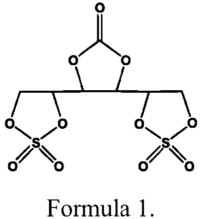

The battery of the present disclosure includes the positive electrode plate, the negative electrode plate, and the electrolyte. The electrolyte includes the compound represented by Formula 1 and LiBF₄. During the fast-charging process of the battery, although the compound represented by Formula 1 can preferentially form a stable SEI film on the surface of the negative electrode to improve the cycle performance of the battery, gas evolution still occurs during long-term cycling, which affects the safety of the battery. In contrast, LiBF₄ can not only inhibit gas evolution but also participate in the formation of a stable CEI, thereby inhibiting the dissolution of metal ions from the positive electrode active material and improving the stability of the positive electrode side. Therefore, the combined use of the two can improve the cycle performance of the battery during fast charging. However, the inventors have discovered that in practical cycling processes of the battery, the compound represented by Formula 1 and LiBF₄ in the electrolyte have only a limited effect on the fast-charging capability of the battery, especially the fast-charging cycle performance. The fast-charging cycle performance of the battery is also closely related to the mass fraction B of the positive electrode active material in the positive electrode active material layer, the specific surface area C m²/g of the positive electrode active material, the specific surface area E m²/g of the negative electrode active material in the negative electrode plate, and the mass fraction G of the compound represented by Formula 1 in the electrolyte. The inventors have further discovered that under stringent conditions such as high voltage and high-rate charge/discharge cycling of the battery, when the above parameters satisfy a formula of 0.20≤(10×B×G×E²)/C≤3.88, the compatibility among the positive electrode, negative electrode, and electrolyte of the battery is optimal, which can minimize the adverse effects of the positive electrode active material and the negative electrode active material on the fast-charging performance and cycle performance of the battery, allowing the battery to exhibit excellent fast-charging cycle performance under high voltage. This is because the overall performance of the battery is jointly determined by the electrolyte, positive electrode, negative electrode, and separator parameters. In the present disclosure, only when the amount of the positive electrode active material satisfies the above-described formula can adhesion between the positive electrode active material and the electrode plate be guaranteed, thereby improving the cycle performance of the battery. On the other hand, only when the specific surface areas of the positive electrode and the negative electrode satisfy the above-described formula can lithium ions be rapidly intercalated and deintercalated at the formed SEI and CEI films, exhibiting excellent kinetic performance and further improving the fast-charging performance of the battery. In this way, when the above-described parameters satisfy the given formula, the battery demonstrates excellent fast-charging cycle performance under high voltage.

In some embodiments, 95%≤B≤99%.

In some embodiments, 0.2≤C≤2.

In some embodiments, 0.2≤E≤3.5.

In some embodiments, 0.5%≤G≤3%.

In some embodiments, a mass ratio of the compound represented by Formula 1 to LiBF₄ is (0.5 to 3): (0.1 to 1).

In some embodiments, a mass fraction of LiBF₄ based on the total mass of the electrolyte ranges from 0.1% to 1%.

In some embodiments, the electrolyte further includes a nitrile compound.

In some embodiments, the nitrile compound includes at least one of succinonitrile, adiponitrile, 1,2-bis(2-cyanoethoxy)ethane, 1,2,3-tris(2-cyanooxy)propane, 1,3,6-hexanetricarbonitrile, or tetracyanoethylene.

In some embodiments, a mass fraction of the nitrile compound based on the total mass of the electrolyte ranges from 0.2% to 3%.

In some embodiments, a mass ratio of the compound represented by Formula 1, LiBF₄, and the nitrile compound is (0.5 to 3):(0.1 to 1):(0.2 to 3).

In some embodiments, the positive electrode active material includes at least one of lithium cobalt oxide, a nickel-cobalt-manganese ternary material, a nickel-cobalt-aluminum ternary material, a lithium-rich manganese material, a lithium nickel manganese oxide material, lithium manganese iron phosphate, or lithium manganese oxide.

In some embodiments, the negative electrode active material includes at least one of graphite, or a silicon-carbon material.

Additional aspects and advantages of the present disclosure will be provided in part in the following description, or will become apparent in part from the following description, or can be learned from practicing of the present disclosure.

### DETAILED DESCRIPTION OF THE EMBODIMENTS

The embodiments of the present disclosure will be described in detail below, which are intended to explain, rather than limit, the present disclosure.

During the high-rate charge/discharge cycling of batteries, metal ions from the positive electrode active material tend to dissolve and further catalyzes the oxidative decomposition of the electrolyte, thereby generating gas. This leads to reduced stability of the SEI and the CEI, impairs the intercalation/deintercalation capability of lithium ions between the positive and negative electrodes, and causes rapid capacity fading of the battery. As a result, the fast-charging cycle performance of the battery deteriorates, and this issue becomes particularly pronounced under high voltage.

A first aspect of the present disclosure provides a battery including a positive electrode plate, a negative electrode plate, and an electrolyte. The positive electrode plate includes a positive electrode active material layer. The positive electrode active material layer includes a positive electrode active material. A mass fraction of the positive electrode active material based on a total mass of the positive electrode active material layer is denoted as B, and a specific surface area of the positive electrode active material is denoted as C m²/g. The negative electrode plate includes a negative electrode active material. A specific surface area of the negative electrode active material is denoted as E m²/g. The electrolyte includes a compound represented by Formula 1 and LiBF₄. A mass fraction of the compound represented by Formula 1 based on a total mass of the electrolyte is denoted as G. The battery satisfies a formula of 0.20≤(10×B×G×E²)/C≤3.88,

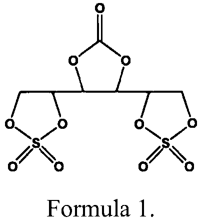

As an example, the value of (10×B×G×E²)/C may be 0.20, 0.5, 1, 1.5, 2, 2.5, 3, 3.5, 3.88, etc.

The battery of the present disclosure includes the positive electrode plate, the negative electrode plate, and the electrolyte. The electrolyte includes the compound represented by Formula 1 and LiBF₄. During the fast-charging process of the battery, although the compound represented by Formula 1 can preferentially form a stable SEI film on the surface of the negative electrode to improve the cycle performance of the battery, gas evolution still occurs during long-term cycling, which affects the safety of the battery. In contrast, LiBF₄ can not only inhibit gas evolution but also participate in the formation of a stable CEI, thereby inhibiting the dissolution of metal ions from the positive electrode active material and improving the stability of the positive electrode side. Therefore, the combined use of the two can improve the cycle performance of the battery during fast charging. However, the inventors have discovered that in practical cycling processes of the battery, the compound represented by Formula 1 and LiBF₄ in the electrolyte have only a limited effect on the fast-charging capability of the battery, especially the fast-charging cycle performance. The fast-charging cycle performance of the battery is also closely related to the mass fraction B of the positive electrode active material in the positive electrode active material layer, the specific surface area C m²/g of the positive electrode active material, the specific surface area E m²/g of the negative electrode active material in the negative electrode plate, and the mass fraction G of the compound represented by Formula 1 in the electrolyte. The inventors have further discovered that under stringent conditions such as high voltage and high-rate charge/discharge cycling of the battery, when the above parameters satisfy a formula of 0.20≤(10×B×G×E²)/C≤3.88, the compatibility among the positive electrode, negative electrode, and electrolyte of the battery is optimal, which can minimize the adverse effects of the positive electrode active material and the negative electrode active material on the fast-charging performance and cycle performance of the battery, allowing the battery to exhibit excellent fast-charging cycle performance under high voltage.

It should be understood that, in the present disclosure, the unit of the specific surface area of the positive electrode active material and the negative electrode active material is m²/g, but the present disclosure does not limit the unit of the specific surface area of the positive electrode active material and the negative electrode active material. For example, the unit of the specific surface area may also be m²/Kg, cm²/g, etc. When the unit of the specific surface area is a unit other than m²/g, if the value of the formula obtained after converting the unit to m²/g ranges from 0.20 to 3.88, it is also within the protection scope of the present disclosure.

In some embodiments, 95%≤B≤99%. For example, B may be 95%, 96%, 96.5%, 97%, 98%, 98.5%, 99%, etc. A higher amount of the positive electrode active material can provide a higher theoretical capacity. However, when it exceeds a certain range, the adhesion between the positive electrode active material and a binder becomes poor, which leads to a significant reduction in electrical conductivity, thereby affecting the cycle performance of the battery. By controlling the positive electrode active material within the above-described range, the present disclosure ensures the conductive stability of the battery and facilitates controlling (10×B×G×E²)/C within the range of 0.20 to 3.88. In this way, the fast-charging cycle performance of the battery under high voltage can be improved.

In some embodiments, 0.2≤C≤2. For example, C may be 0.2, 0.3, 0.6, 0.9, 1.3, 1.5, 2, etc. The positive electrode active material has active sites on the surface of the positive electrode active material. The larger the specific surface area of the positive electrode active material, the greater the number of active sites. LiBF₄ can combine with the active sites on the surface of the positive electrode active material to form the CEI. When the specific surface area is too small, it is difficult for LiBF₄ to form a complete CEI on the surface of the positive electrode. Conversely, when the specific surface area is too large, a thicker CEI tends to form, which is not conducive to deintercalation of lithium ions. By controlling the specific surface area of the positive electrode active material within the range of 0.2 m²/g to 2 m²/g, the present disclosure can form a CEI film with low impedance and high stability, thereby improving the kinetic performance, and facilitate the control of (10×B×G×E²)/C within the range of 0.20 to 3.88. In this way, the fast-charging cycle performance of the battery under high voltage can be improved.

In some embodiments, 0.2≤E≤3.5. For example, E may be 0.2, 0.8, 1.2, 1.6, 2, 2.8, 3.5, etc. The negative electrode material also has active sites on the surface of the negative electrode material. However, when there is a large difference in the specific surface areas between the positive electrode active material and the negative electrode active material, it also leads to a mismatch in the kinetics between the positive and negative electrodes of the battery. By controlling the specific surface area of the negative electrode active material within the range of 0.2 m²/g to 3.5 m²/g in the present disclosure, the specific surface area of the positive electrode active material can be matched with that of the negative electrode active material, thereby improving the kinetic performance of the battery. It also facilitates the control of (10×B×G×E²)/C within the range of 0.20 to 3.88. In this way, the fast-charging cycle performance of the battery under high voltage can be improved.

In some embodiments, 0.5%≤G≤3%. For example, G is 0.5%, 0.8%, 1%, 1.5%, 2%, 2.5%, 3%, etc. When G is within this range, the content of the compound represented by Formula 1 in the electrolyte is moderate, which can ensure the formation of effective CEI and SEI films with low impedance and high stability on the surfaces of the positive and negative electrodes, and facilitate the control of (10×B×G×E²)/C within the range of 0.20 to 3.88. In this way, the fast-charging cycle performance of the battery under high voltage can be improved.

Since the cycle performance and fast-charging performance of lithium-ion batteries are jointly determined by the positive electrode plate, the negative electrode plate, and the electrolyte, the inventors have discovered that when the compound represented by Formula 1 and LiBF₄ are added to the electrolyte, the cycle performance and fast-charging performance of the battery can be optimized by adjusting the values of B, G, E, and C. A higher mass fraction B of the positive electrode active material means that more positive electrode active material participates in the reaction, thereby providing more lithium ions and increasing the capacity of the battery. A larger specific surface area C of the positive electrode active material means more lithium-ion intercalation/deintercalation sites, thereby increasing the charging/discharging rate of the battery. Similar to C, the specific surface area E of the negative electrode active material affects lithium-ion diffusion and reaction rate at the negative electrode, and experiments have shown that the specific surface area of the negative electrode active material has a square-level impact on battery performance. The mass fraction G of the compound represented by Formula 1 in the electrolyte affects the quality of SEI formation in the electrolyte, thereby affecting the cycle performance.

That is to say, based on experience and experimental findings, within a certain range, each of the parameter positively correlates with the cycle and fast-charging performance. Dividing the product (10×B×G×E²) by the specific surface area C of the positive electrode active material achieves normalization, in such a manner that the formula is applied to positive electrode active materials with different specific surface areas. In other words, increasing B, E, or G can potentially enhance battery performance, but a correspondingly larger C is required to maintain charge/discharge rate and cycling stability.

The specific physical meaning of the formula (10×B×G×E²)/C actually represents the degree of matching among the positive electrode, negative electrode, and electrolyte in the battery. Experiments have shown that when the value of (10×B×G×E²)/C ranges from 0.20 to 3.88, the matching among the positive electrode, negative electrode, and electrolyte of the battery is optimal. This minimizes the adverse effects of the positive electrode active material and the negative electrode active material on the fast-charging performance and cycle performance of the battery, thereby enabling the battery to exhibit excellent fast-charging cycle performance under high voltage. An excessively large or small value of this formula leads to improper matching between the negative electrode and the positive electrode, thereby affecting lithium-ion transport between the positive electrode and the negative electrode and further affecting the cycle performance and rate capability of the battery.

In some embodiments, a mass fraction of LiBF₄ based on the total mass of the electrolyte ranges from 0.1% to 1%. For example, it may be 0.1%, 0.3%, 0.5%, 0.7%, 0.9%, 1%, etc. In this way, controlling the mass fraction of LiBF₄ within the above-described range is sufficient for it to inhibit gas evolution and also participate in the formation of a stable CEI, thereby inhibiting the dissolution of metal ions from the positive electrode active material. As a result, the fast-charging cycle performance of the battery under high voltage can be improved.

In some embodiments, a mass ratio of the compound represented by Formula 1 to LiBF₄ is (0.5 to 3): (0.1 to 1). For example, it may be 2:0.5, 2:0.1, 2:1, 0.5:0.5, 3:0.5, etc. Controlling the mass ratio of the compound represented by Formula 1 to LiBF₄ in the electrolyte within the above-described range can give fully play to a synergistic effect of the compound represented by Formula 1 and LiBF₄, which inhibits the dissolution of metal ions from the positive electrode active material and improves the stability of both the positive and negative electrodes, further improving the cycle performance of the battery during fast charging.

In some embodiments, the electrolyte further includes a nitrile compound. When a charging cut-off voltage of the battery is above 4.5V, the metal ions in the positive electrode active material still dissolve under high voltage and catalyze the decomposition of the electrolyte to produce gas. On this basis, the further introduction of the nitrile compound into the electrolyte can further improve the fast-charging cycle performance under high voltage. This is mainly due to the strong complexation between cyano and metal ions, which not only inhibits the dissolution of the metal ions from the positive electrode active material and avoids excessive oxidative decomposition of the electrolyte during cycling, but also improves the CEI and enhances the stability of the battery. Therefore, in the electrolyte, the combined use of the compound represented by Formula 1, LiBF₄, and the nitrile compound can further improve the fast-charging cycle performance of the battery under high voltage.

In some embodiments, a mass ratio of the compound represented by Formula 1, LiBF₄, and the nitrile compound is (0.5 to 3):(0.1 to 1):(0.2 to 3). For example, it may be 1:0.5:2, 0.5:0.5:2, 3:0.5:2, 1:0.1:2, 1:1:2, 1:0.5:0.2, 1:0.5:3, etc. In this way, controlling the mass ratio of the compound represented by Formula 1, LiBF₄, and the nitrile compound within the above-described range can give full play to the synergistic effect of the compound represented by Formula 1, LiBF₄, and the nitrile compound, further improving the fast-charging cycle performance of the battery under a high voltage above 4.5V.

In some embodiments, the nitrile compound includes at least one of succinonitrile, adiponitrile, 1,2-bis(2-cyanoethoxy)ethane, 1,2,3-tris(2-cyanooxy)propane, 1,3,6-hexanetricarbonitrile, or tetracyanoethylene. The above-described nitrile compound, serving as the electrolyte additive, can further improve the fast-charging cycle performance of the battery at a high voltage above 4.5V.

In some embodiments, a mass fraction of the nitrile compound based on the total mass of the electrolyte ranges from 0.2% to 3%. For example, it may be 0.2%, 0.5%, 1%, 1.5%, 2%, 2.5%, 3%, etc. In this way, controlling the content of the nitrile compound in the electrolyte within the above-described range can reduce the insufficiency in inhibiting the dissolution of the metal ions caused by an excessively small amount of the nitrile compound, and also alleviate the increase in impedance caused by an excessively large amount of the nitrile compound, thereby further improving the fast-charging cycle performance of the battery at a high voltage above 4.5V.

In some embodiments, the positive electrode active material includes at least one of lithium cobalt oxide, a nickel-cobalt-manganese ternary material, a nickel-cobalt-aluminum ternary material, a lithium-rich manganese material, a lithium nickel manganese oxide material, lithium manganese iron phosphate, or lithium manganese oxide. The above-described positive electrode active material exhibits high energy density and excellent cycle performance, thereby improving cycle stability of the battery under high voltage.

In some embodiments, the battery is a lithium-ion battery. The positive electrode active material includes lithium cobalt oxide, which exhibits excellent cycle performance and high energy density, and has a low probability of side reactions with the compound represented by Formula 1, LiBF₄, and the nitrile compound in the electrolyte of the present disclosure, with strong high-voltage resistance. In this way, the fast-charging cycle performance of the battery under high voltage can be improved.

In some embodiments, the electrolyte further includes a non-aqueous organic solvent. The non-aqueous organic solvent includes at least one of ethylene carbonate, propylene carbonate, γ-butyrolactone, phenyl acetate, 1,4-butane sultone, ethyl methyl carbonate, diethyl carbonate, methyl propyl carbonate, methyl formate, ethyl acetate, methyl acetate, propyl acetate, butyl acetate, methyl propionate, ethyl propionate, propyl propionate, butyl propionate, methyl butyrate, ethyl butyrate, 1,2-dimethoxyethane, 2,2,3,3-tetrafluoro-1-(1,1,2,2-tetrafluoroethoxy)propane, methyl trifluoroethyl carbonate, (2,2,2)-trifluoroethyl carbonate, 2,2-difluoroethyl acetate, 2,2-difluoroethyl propionate, or 2,2-difluoroethyl methyl carbonate. The mass fraction of the non-aqueous organic solvent in the electrolyte ranges from 60% to 80%. For example, it may be 60%, 65%, 70%, 75%, 80%, etc. When the solvent is within the above-described range, it can be ensured that the battery has stable electrochemical properties.

In some embodiments of the present disclosure, the electrolyte further includes a lithium salt. The lithium salt includes at least one of LiPF₆, LiAsF₆, LiClO₄, LiB(C₂O₄)₂, LiBF₂C₂O₄, LiN(SO₂F)₂, LiN(SO₂CF₃)₂, LiPO₂F₂, LiPF₂(C₂O₄)₂, or LiPF₄C₂O₄. A mass fraction of the lithium salt in the electrolyte ranges from 10% to 18%. For example, it may be 10%, 12%, 14%, 15%, 18%, etc. Controlling the electrolyte salt within the above-described range can ensure that the battery has stable electrochemical performance.

Normally, the battery includes the positive electrode plate, the negative electrode plate, the electrolyte, and the separator. During charging/discharging of the battery, active ions are intercalated into and deintercalated from the positive and negative electrode plates. The electrolyte plays a role in conducting ions between the positive and negative electrode plates. The separator is disposed between the positive electrode plate and the negative electrode plate, mainly playing a role in preventing a short circuit between the positive and negative electrodes and allowing ions to pass through.

The positive electrode plate includes a positive current collector and the positive electrode active material layer disposed at at least one surface of the positive current collector. The positive electrode active material layer includes the above-described positive electrode active material.

In some embodiments of the present disclosure, the positive current collector may include metal foil or a composite positive current collector. For example, the metal foil may be aluminum foil. The composite positive current collector may include a polymer material substrate and a metal layer formed at at least one surface of the polymer material substrate. For example, the composite positive current collector can be formed by forming a metal material (aluminum, aluminum alloy, nickel, nickel alloy, etc.) on the polymer material substrate (such as polypropylene (PP), polyethylene glycol terephthalate (PET), polybutylene terephthalate (PBT), etc.).

In some embodiments of the present disclosure, the positive electrode active material layer may optionally include a conductive agent. By way of example, the conductive agent includes at least one of superconducting carbon, acetylene black, carbon black, Ketjen black, carbon dots, carbon nanotubes, graphene, or carbon nanofibers.

In some embodiments of the present disclosure, the positive electrode active material layer may optionally include a binder. By way of example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, or a fluorinate acrylate resin.

In some embodiments of the present disclosure, the positive electrode plate can be prepared in the following manner: the above-mentioned components for preparing the positive electrode plate, such as the positive electrode active material, conductive agent, and binder, are dispersed in a solvent (for example, N-methylpyrrolidone) to form a positive electrode slurry; the positive electrode slurry is coated at the positive current collector, and after processes such as drying and cold pressing, the positive electrode plate can be obtained.

The negative electrode plate includes a negative current collector and a negative electrode active material layer disposed at at least one surface of the negative current collector. The negative electrode active material layer includes a negative electrode active material.

In some embodiments of the present disclosure, the negative current collector may be metal foil or a composite current collector. For example, the copper foil may be used as the metal foil. The composite current collector may include a polymer material substrate and a metal layer formed at at least one surface of the polymer material substrate. The composite current collector may be formed by forming a metal material (copper, copper alloy, nickel, nickel alloy, etc.) on the polymer substrate (such as polypropylene (PP), polyethylene terephthalate (PET), polybutylene terephthalate (PBT), etc.).

In some embodiments of the present disclosure, the negative electrode active material may be a negative electrode active material commonly known in the art for use in batteries. For example, the negative electrode active material may includes at least one of natural graphite, artificial graphite, soft carbon, hard carbon, mesocarbon microbeads, nanocarbon, elemental silicon, silicon oxide compounds, silicon-carbon composites, silicon alloys, elemental tin, tin oxide compounds, tin-carbon composites, tin alloys, or lithium titanate.

In some embodiments of the present disclosure, the negative electrode active material includes at least one of graphite, or a silicon-carbon material. The above-described negative electrode active material can better match the positive electrode active material and the electrolyte, adapting to high-voltage and high-rate scenarios of the battery and allowing the battery to exhibit excellent fast-charging cycle performance under high voltage.

In some embodiments of the present disclosure, the negative electrode active material layer may optionally further include a binder. The binder may includes at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), or carboxymethyl chitosan (CMCS).

In some embodiments of the present disclosure, the negative electrode active material layer may optionally further include a conductive agent. The conductive agent may include at least one of superconducting carbon, acetylene black, carbon black, Ketjen black, carbon dots, carbon nanotubes, graphene, or carbon nanofibers.

In some embodiments of the present disclosure, the negative electrode active material layer may optionally further include other additives, such as a thickener (e.g., sodium carboxymethylcellulose (CMC-Na), etc.).

In some embodiments of the present disclosure, the negative electrode plate may be prepared in the following manner: the above-mentioned components for preparing the negative electrode plate, such as the negative electrode active material, conductive agent, binder, and any other components, are dispersed in a solvent (for example, deionized water) to form a negative electrode slurry; the negative electrode slurry is coated at the negative current collector, and after processes such as drying and cold pressing, the negative electrode plate can be obtained.

The present disclosure has no special restrictions on the type of separator; and any known porous separator with good chemical and mechanical stability can be selected.

In some embodiments of the present disclosure, the separator may be made of a material at least one of glass fiber, non-woven fabric, polyolefin film, aromatic polyamide film, polytetrafluoroethylene film, or polyether sulfone film.

In some embodiments of the present disclosure, the separator may have a thickness ranging from 10 µm to 12 µm, for example, 10 µm, 11 µm, 12 µm, etc.

The embodiments of the present disclosure are described in detail below. It should be noted that, the embodiments described below are illustrative only, and are intended to explain, rather than limit, the present disclosure. In addition, unless explicitly stated otherwise, all reagents used in the following embodiments are commercially available, or can be synthesized according to the methods described herein or known methods. Any unspecified reaction conditions can be easily determined by those skilled in the art.

### Example 1

### 1. Preparation of the Positive Electrode Plate

The positive electrode active material (lithium cobalt oxide), binder polyvinylidene fluoride (PVDF), conductive carbon black, and conductive carbon nanotubes were mixed uniformly at a weight ratio of 95:2.3:2:0.7. N-methylpyrrolidone (NMP) was added, and the mixture was stirred in a vacuum mixer until a homogeneous, flowable positive electrode slurry was obtained. The positive electrode slurry was evenly coated onto the positive current collector aluminum foil at a coating weight of 35 g/m², dried at 85°C, and then subjected to cold pressing, followed by trimming, cutting, and slitting. After slitting, it was dried at 85°C under vacuum conditions for 4 hours, and then the tabs were welded to obtain the positive electrode plate. The specific surface area of the lithium cobalt oxide C was 0.6 m²/g.

### 2. Preparation of the Negative Electrode Plate

The negative electrode active material graphite, conductive agent carbon black, thickener sodium carboxymethyl cellulose (CMC-Na), and binder styrene-butadiene rubber were mixed at a weight ratio of 95:1.5:1:2.5. Deionized water was added, and the mixture was stirred in a vacuum mixer to obtain the negative electrode slurry. The negative electrode slurry was evenly coated onto the negative current collector copper foil at a coating weight of 20 g/m², dried at 85°C, and then subjected to cold pressing, followed by trimming, cutting, and slitting. After slitting, it was dried at 85°C under vacuum conditions for 4 hours, and then the tabs were welded to obtain the negative electrode plate. The specific surface area of the graphite E was 1.6 m²/g.

### 3. Preparation of the Electrolyte

In an argon-filled glove box (moisture<10ppm, oxygen<1ppm), the solvents ethylene carbonate, propylene carbonate, diethyl carbonate, and propyl propionate were evenly mixed at a mass ratio of 1:1:1:2. Fully dried lithium hexafluorophosphate was quickly added to the solvent mixture to a molar concentration of the lithium hexafluorophosphate in the electrolyte being 1 mol/L. Then, the compound represented by Formula 1, LiBF₄, and succinonitrile were added in sequence and mixed thoroughly to obtain the electrolyte. The mass fraction of the compound represented by Formula 1 in the electrolyte G was 2%, the mass fraction of LiBF₄ in the electrolyte was 0.2%, and the mass fraction of succinonitrile in the electrolyte was 2%.

### 4. Separator

A polyethylene separator with a thickness of 8 µm was selected.

### 5. Preparation of the Lithium-Ion Battery

The positive electrode plate, negative electrode plate, and separator prepared according to the above-described processes were assembled by winding to form a lithium-ion battery with a thickness of 4.7 mm, a width of 55 mm, and a length of 60 mm. The battery was then vacuum-baked at 85°C for 10 hours and injected with the previously prepared electrolyte. After standing for 24 hours, the battery was placed in an environment of 45°C with a pressure of 3 kg applied. Then, it was charged to 4.5 V at 0.1 C (195 mA), and left to stand for more than 24 hours under the same temperature and pressure conditions (to fully activate the battery) to obtain the battery.

The battery satisfied (10×B×G×E²)/C=0.81.

The preparation methods of the lithium-ion batteries in Examples 2 to 27 and Comparative Examples 1 to 8 were basically the same as that in Example 1, except that the electrolyte composition, positive electrode active material, and negative electrode active material differed, as shown in Table 1.

Comparative Example 1 contained two additives (the compound represented by Formula 1 and LiBF₄), but the value of the formula (10×B×G×E²)/C was too low. Comparative Example 2 contained three additives (the compound represented by Formula 1, LiBF₄, and a nitrile compound), but the value of the formula (10×B×G×E²)/C was too low. Comparative Example 3 contained two additives (the compound represented by Formula 1 and LiBF₄), but the value of the formula (10×B×G×E²)/C was too high. Comparative Example 4 contained three additives (the compound represented by Formula 1, LiBF₄, and a nitrile compound), but the value of the formula (10×B×G×E²)/C was too high. Comparative Example 5 and Comparative Example 7 had no LiBF₄ added to the electrolyte. Comparative Example 6 and Comparative Example 8 had no compound represented by Formula 1 added to the electrolyte.

**Table 1**

| | Content of positive electrode active material B | Specific surface area of positive electrode active material C (m²/g) | Specific surface area of negative electrode active material E (m²/g) | Content of compou nd represent ed by Formula 1 G | Nitrile compound | Mass ratio of compound represented by Formula 1, LiBF₄, and nitrile compound or mass ratio of compound represented by Formula 1 to LiBF₄ | (10×B× G×E²)/C (m²/g) |
|---|---|---|---|---|---|---|---|
| Example 1 | 95% | 0.6 | 1.6 | 2% | Succinonitrile | 2:0.2:2 | 0.81 |
| Example 2 | 95% | 0.6 | 1.6 | 2% | / | 2:0.2 | 0.81 |
| Example 3 | 95% | 0.6 | 1.6 | 0.50% | / | 0.5:0.2 | 0.2 |
| Example 4 | 95% | 0.6 | 1.6 | 1% | / | 1:0.2 | 0.41 |
| Example 5 | 95% | 0.6 | 1.6 | 2.50% | / | 2.5:0.2 | 1.01 |
| Example 6 | 95% | 0.6 | 1.6 | 3% | / | 3:0.2 | 1.22 |
| Example 7 | 95% | 0.6 | 1.6 | 2% | / | 2:0.1 | 0.81 |
| Example 8 | 95% | 0.6 | 1.6 | 2% | / | 2:1 | 0.81 |
| Example 9 | 95% | 0.6 | 1.6 | 2% | Adiponitrile | 2:0.2:2 | 0.81 |
| Example 10 | 95% | 0.6 | 1.6 | 2% | 1,2-bis(2-cyanoethoxy) ethane | 2:0.2:2 | 0.81 |
| Example 11 | 95% | 0.6 | 1.6 | 2% | 1,2,3-tris(2-cyanooxy)pro pane | 2:0.2:2 | 0.81 |
| Example 12 | 95% | 0.6 | 1.6 | 2% | 1,3,6-hexanetricarb onitrile | 2:0.2:2 | 0.81 |
| Example 13 | 95% | 0.6 | 1.6 | 2% | Tetracyanoeth ylene | 2:0.2:2 | 0.81 |
| Example 14 | 97% | 0.6 | 1.6 | 2% | Succinonitrile | 2:0.2:2 | 0.83 |
| Example 15 | 99% | 0.6 | 1.6 | 2% | Succinonitrile | 2:0.2:2 | 0.84 |
| Example 16 | 95% | 0.2 | 1.6 | 2% | Succinonitrile | 2:0.2:2 | 2.43 |
| Example 17 | 95% | 2 | 1.6 | 2% | Succinonitrile | 2:0.2:2 | 0.24 |
| Example 18 | 95% | 0.6 | 2.1 | 2% | Succinonitrile | 2:0.2:2 | 1.4 |
| Example 19 | 95% | 0.6 | 3.5 | 2% | Succinonitrile | 2:0.2:2 | 3.88 |
| Example 20 | 95% | 0.6 | 1.6 | 0.50% | Succinonitrile | 0.5:0.2:2 | 0.2 |
| Example 21 | 95% | 0.6 | 1.6 | 1% | Succinonitrile | 1:0.2:2 | 0.41 |
| Example 22 | 95% | 0.6 | 1.6 | 2.50% | Succinonitrile | 2.5:0.2:2 | 1.01 |
| Example 23 | 95% | 0.6 | 1.6 | 3% | Succinonitrile | 3:0.2:2 | 1.22 |
| Example 24 | 95% | 0.6 | 1.6 | 2% | Succinonitrile | 2:0.1:2 | 0.81 |
| Example 25 | 95% | 0.6 | 1.6 | 2% | Succinonitrile | 2:1:2 | 0.81 |
| Example 26 | 95% | 0.6 | 1.6 | 2% | Succinonitrile | 2:0.2:0.2 | 0.81 |
| Example 27 | 95% | 0.6 | 1.6 | 2% | Succinonitrile | 2:0.2:3 | 0.81 |
| Comparative Example 1 | 95% | 0.6 | 0.7 | 2% | / | 2:0.2 | 0.16 |
| Comparative Example 2 | 95% | 0.6 | 0.7 | 2% | Succinonitrile | 2:0.2:2 | 0.16 |
| Comparative Example 3 | 95% | 0.2 | 2.1 | 2% | / | 2:0.2 | 4.19 |
| Comparative Example 4 | 95% | 0.2 | 2.1 | 2% | Succinonitrile | 2:0.2:2 | 4.19 |
| Comparative Example 5 | 95% | 0.6 | 1.6 | 2% | Succinonitrile | / | 0.81 |
| Comparative Example 6 | 95% | 0.6 | 1.6 | 0 | Succinonitrile | / | / |
| Comparative Example 7 | 95% | 0.6 | 1.6 | 2% | / | / | 0.81 |
| Comparative Example 8 | 95% | 0.6 | 1.6 | 0 | / | / | / |

The batteries prepared in Examples 1 to 27 and Comparative Examples 1 to 8 were subjected to a room-temperature fast-charging cycling test at 25°C, and the capacity retention rate and swelling rate of the batteries after 800 cycles were recorded. The performance test results are shown in Table 2.

At 25°C, the lithium-ion battery was allowed to stand for 5 minutes, charged to 4.50 V at a constant current of 2C, followed by another 5-minute standing period. Then, it was charged at constant current and constant voltage until the current was less than or equal to 0.05C, left to stand for 5 minutes again, and then discharged to 3.0 V at a constant current of 1C. The above procedure was repeated for 800 charging/discharging cycles. The maximum discharge capacity of the first 5 cycles was recorded as Q, and the discharge capacity after 800 cycles was selected as Q1. Therefore, the calculation method for the capacity retention rate after 800 cycles was as follows:

Capacity retention rate after 800 cycles (%)=Q1/Q×100.

The thickness of the fresh battery was measured using a thickness tester and recorded as P1, and the thickness of the battery after 800 cycles was recorded as P2. Therefore, the calculation formula for the battery cell swelling rate after 800 cycles was as follows:

Battery cell swelling rate after 800 cycles (%)=P2/P1×100.

**Table 2**

| | Capacity retention rate after 800 cycles at 2C/1C and 25°C | Battery cell swelling rate after 800 cycles at 2C/1C and 25°C |
|---|---|---|
| Example 1 | 88.4% | 4.6% |
| Example 2 | 78.9% | 10.3% |
| Example 3 | 76.5% | 11.2% |
| Example 4 | 77.6% | 10.8% |
| Example 5 | 78.1% | 10.5% |
| Example 6 | 71.8% | 9.8% |
| Example 7 | 78.8% | 10.7% |
| Example 8 | 72.3% | 9.5% |
| Example 9 | 87.1% | 5.3% |
| Example 10 | 87.5% | 5.7% |
| Example 11 | 86.4% | 6.5% |
| Example 12 | 88.3% | 4.8% |
| Example 13 | 87.7% | 5.1% |
| Example 14 | 88.2% | 4.7% |
| Example 15 | 88.9% | 4.3% |
| Example 16 | 85.6% | 7.2% |
| Example 17 | 84.3% | 8.7% |
| Example 18 | 85.3% | 8.3% |
| Example 19 | 87.1% | 5.2% |
| Example 20 | 83.2% | 8.9% |
| Example 21 | 86.8% | 7.4% |
| Example 22 | 86.5% | 7.6% |
| Example 23 | 85.4% | 8.1% |
| Example 24 | 88.3% | 4.7% |
| Example 25 | 85.9% | 5.3% |
| Example 26 | 83.6% | 7.4% |
| Example 27 | 88.7% | 4.8% |
| Comparative Example 1 | 40.3% | 22.5% |
| Comparative Example 2 | 55.7% | 20.3% |
| Comparative Example 3 | 50.3% | 23.6% |
| Comparative Example 4 | 52.1% | 16.5% |
| Comparative Example 5 | 45.80% | 25.60% |
| Comparative Example 6 | 33.60% | 32.20% |
| Comparative Example 7 | 42.40% | 28.70% |
| Comparative Example 8 | 30.30% | 53.50% |

It can be seen from the data in Table 2 that the batteries of Examples 1 to 27 exhibited significantly higher capacity retention rate and lower swelling rate than those of Comparative Examples 5 to 8, indicating that LiBF₄ and the compound represented by Formula 1 acted synergistically, which ensured the fast-charging cycle performance of the battery under high voltage. It can be seen from Example 1, Examples 9 to 27, and Examples 2 to 8 that the nitrile compound can further improve the fast-charging cycle performance of the battery under high voltage. In addition, Comparative Examples 2 and 4 added the compound represented by Formula 1 and LiBF₄ in appropriate proportions, and Comparative Examples 1 and 3 added the compound represented by Formula 1, LiBF₄ and the nitrile compound in appropriate proportions. However, the calculated values of the formula (10×B×G×E²)/C in Comparative Examples 1 to 4 did not fall between 0.2 and 3.88, and the capacity retention rates of the batteries were much lower than those in Examples 1 to 27. These results demonstrate that in the present disclosure, the addition of the compound represented by Formula 1 and LiBF₄ to the electrolyte with the formula value falling within 0.2 to 3.88, or the addition of the compound represented by Formula 1, LiBF₄, and the nitrile compound to the electrolyte with the formula value falling within 0.2 to 3.88 enables excellent fast-charging cycle performance under high voltage.

In the description of this specification, descriptions with reference to the terms "an embodiment", "some embodiments", "examples", "specific examples" "some examples" etc., mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner. In addition, different embodiments or examples and features of different embodiments or examples described in the specification may be combined by those skilled in the art without mutual contradiction.

Although embodiments of the present disclosure have been illustrated and described above, it should be understood that the above embodiments are merely exemplary, and cannot be construed to limit the present disclosure. For those skilled in the art, changes, alternatives, and modifications can be made to the embodiments without departing from the scope of the present disclosure.

## Claims

1. A battery, comprising:
a positive electrode plate comprising a positive electrode active material layer, the positive electrode active material layer comprising a positive electrode active material, wherein a mass fraction of the positive electrode active material based on a total mass of the positive electrode active material layer is denoted as B, and wherein a specific surface area of the positive electrode active material is denoted as C m²/g;
a negative electrode plate comprising a negative electrode active material, wherein a specific surface area of the negative electrode active material is denoted as E m²/g; and
an electrolyte comprising a compound represented by Formula 1 and LiBF₄, wherein a mass fraction of the compound represented by Formula 1 based on a total mass of the electrolyte is denoted as G,
wherein the battery satisfies a formula of 0.20≤(10×B×G×E²)/C≤3.88,

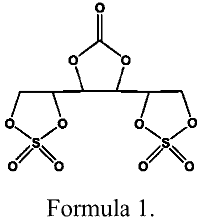

2. The battery according to claim 1, wherein 95%≤B≤99%.

3. The battery according to claim 1, wherein 0.2≤C≤2.

4. The battery according to claim 1, wherein 0.2≤E≤3.5.

5. The battery according to claim 1, wherein 0.5%≤G≤3%.

6. The battery according to any one of claims 1 to 5, wherein a mass ratio of the compound represented by Formula 1 to LiBF₄ is (0.5 to 3): (0.1 to 1).

7. The battery according to any one of claims 1 to 5, wherein a mass fraction of LiBF₄ based on the total mass of the electrolyte ranges from 0.1% to 1%.

8. The battery according to any one of claims 1 to 5, wherein the electrolyte further comprises a nitrile compound.

9. The battery according to claim 8, wherein:
a mass ratio of the compound represented by Formula 1, LiBF₄, and the nitrile compound is (0.5 to 3):(0.1 to 1):(0.2 to 3); and/or
a mass fraction of the nitrile compound based on the total mass of the electrolyte ranges from 0.2% to 3%; and/or
the nitrile compound comprises at least one of succinonitrile, adiponitrile, 1,2-bis(2-cyanoethoxy)ethane, 1,2,3-tris(2-cyanooxy)propane, 1,3,6-hexanetricarbonitrile, or tetracyanoethylene.

10. The battery according to any one of claims 1 to 5, wherein:
the positive electrode active material comprises at least one of lithium cobalt oxide, a nickel-cobalt-manganese ternary material, a nickel-cobalt-aluminum ternary material, a lithium-rich manganese material, a lithium nickel manganese oxide material, lithium manganese iron phosphate, or lithium manganese oxide; and/or
the negative electrode active material comprises at least one of graphite, or a silicon-carbon material.
